## Europäisches Patentamt

## European Patent Office

## Office européen des brevets

(19)

(11) **EP 0 643 520 B1**

(12) **EUROPEAN PATENT SPECIFICATION**

(45) Date of publication and mention
of the grant of the patent:
**20.03.2002  Bulletin 2002/12**

(51) Int Cl.[7]: **H04M 3/38**, H04M 15/00,
G10L 17/00

(21) Application number: **94112511.4**

(22) Date of filing: **10.08.1994**

(54) **System and method for passive voice verification in a telephone network**

System und Verfahren zur passiven Sprachverifizierung in einem Fernsprechnetzwerk

Système et méthode pour vérification passive de la voix dans un réseau téléphonique

(84) Designated Contracting States:
**DE ES FR GB IT**

(30) Priority: **10.08.1993  US 105849**

(43) Date of publication of application:
**15.03.1995  Bulletin 1995/11**

(73) Proprietor: **ITT MANUFACTURING
ENTERPRISES, INC.
Wilmington, Delaware 19801 (US)**

(72) Inventors:
• **Higgins, Alan Lawrence
San Diego, CA 92131 (US)**
• **Bahler, Lawrence G
San Diego, CA 92131 (US)**

(74) Representative: **Esser, Wolfgang
ITT Industries
Regional Patent Office - Europe
c/o ITT Cannon GmbH
Cannonstrasse 1
71384 Weinstadt (DE)**

(56) References cited:
**WO-A-86/05618**          **US-A- 4 720 863**
**US-A- 5 127 043**

**Description**

This invention relates generally to a speaker verification system and more particularly, to an apparatus and method for passive voice monitoring in a telephone network.

Long distance credit card services must identify a user to ensure that an impostor does not use the service under another person's identity. It has been estimated that the aggregate losses to the long distance services due to unauthorized use is in the one to four billion dollar range. Because of the magnitude of these losses, telephone companies are investigating methods of verifying the identity of the caller each time a call is placed. Prior art systems typically provide a lengthy identification number (calling card number) which must be entered via the phone's keypad to initiate the long distance service. Unfortunately, this approach is prone to abuse because the identification number may be easily appropriated by theft, or by simply observing the entry of the identification number by another. Accordingly, a biometric technique, as opposed to a method based solely on the knowledge of a password or possession of a key, is preferable. Voice is an ideal medium because every consumer already has the required equipment, a telephone.

A number of recognition techniques have been proposed for identifying a speaker on the basis of prerecorded samples of his speech. As is known in the art, it is possible to represent a voice pattern with a sequence of P-dimensional feature vectors. In accordance with the pattern to be represented, the number P may be from 1 to 10 or more. Speech utterances may be represented as collections of these vectors. In certain conventional speaker verification systems, the password speech pattern uttered by a registered speaker is stored as a reference pattern, and at the time of verification, a code specifying the speaker (hereinafter the "registered speech number") and the password spoken by a speaker to be verified are input. The reference pattern specified by the registered speaker number and the uttered speech pattern of the password (hereinafter the "input pattern") are compared with each other to calculate an evaluation value of dissimilarity therebetween. If the dissimilarity is smaller than a predetermined threshold value, the speaker is recognized as the registered person, and if the dissimilarity is greater, the speaker is judged to be an impostor.

Voice verification methods currently being tested by telephone companies prompt the user to speak one or more predetermined, short authorization phrases before a connection is made with the called party. An example of such a method is described in US-A-5 127 043. The interactive session in which phrases are prompted and spoken takes about ten seconds. Even without considering the cost of such systems themselves, any savings in fraudulent charges realized by such voice verification systems may be easily offset or negated by other costs associated therewith. Such costs include the additional telephone line connection charges, the additional time consumers must spend to make a call, and the loss of business due to false rejections. Moreover, prior art speaker verification systems have not provided the necessary discrimination between true speakers and impostors to be commercially acceptable in applications where the speaking environment is unfavorable.

Speaker verification over long distance telephone networks present challenges not previously overcome. Variations in handset microphones result in severe mismatches between speech data collected from different handsets for the same speaker. Further, the telephone channels introduce signal distortions which reduce the accuracy of the speaker verification system. Also, there is little control over the speaking conditions. Finally, the need to prompt the customer to recite a predetermined speech sample and pre-analyze the same associated with prior art techniques imposes additional costs in the form of additional telephone line connection charges and the additional time customers must spend to place a call.

Accordingly, a need exists for a voice verification system to prevent calling card abuse over telephone lines. Further, a need has arisen to provide a speaker verification system which effectively, yet passively, discriminates between true speakers and impostors, particularly in a long distance network setting.

In accordance with the present invention, a speaker verification method and apparatus is provided which substantially reduces the problems associated with prior art verification systems.

A telephone long distance service is provided using speaker verification to determine whether a user is a valid user or an impostor. The user claims an identity by offering some form of identification, typically by entering a calling card number on the phone's touch-tone keypad or by a magnetic strip on the card which is read by the telephone. Unrestricted, extemporaneous speech of a group of customers are digitized, analyzed in accordance with a speech front-end processing circuit, and characterized as a non-parametric set of speech feature vectors. The extemporaneous speech of the long distance telephone service user claiming the identity of a service customer via his card number is digitized and analyzed in a like manner. The identity of the user is verified by comparing, either during or after the call, the signals in accordance with an algorithm which compares a reference utterance of a known customer with input utterances from one or more unknown telephone service users, one of which users has claimed the identity of the customer. This comparison results in a decision to accept or reject the hypothesized identity. The identity hypothesis to be tested is thus derived from the calling card of the customer.

## BRIEF DESCRIPTION OF THE DRAWINGS

The above objects and further features and advantages of the present invention are described in detail below in conjunction with the drawings, of which:

FIG.1    illustrates a flow chart depicting a personal identity verification system for long distance calling card services using speech verification;

FIG.1a    illustrates a alternative flow chart depicting a personal identity verification system for long distance calling card services using speech verification;

FIG. 2    illustrates a block diagram depicting the processing of enrollment and caller audio speech signals;

FIG. 3    is a block diagram of the baseline algorithm showing the processing steps of inter-message matching, score normalization, and queue processing of the baseline algorithm used in verifying the identity of the unknown caller;

FIG. 4    is a schematic diagram illustrating the utterance matching and scoring process of the baseline algorithm depicted in FIG. 3; and

FIG. 5    is a schematic diagram illustrating the score normalization process of the baseline algorithm depicted in FIG. 3.

## DETAILED DESCRIPTION OF THE INVENTION

In accordance with the present invention, voice verification is performed using ordinary conversational speech without placing any limitations on the message content. Calls are made in the normal way and customers need not even be aware that passive monitoring is in effect. Passive monitoring achieved by the system of the present invention does not, however, affect the privacy of such calls because it does not include any provision for converting signals into an audible form.

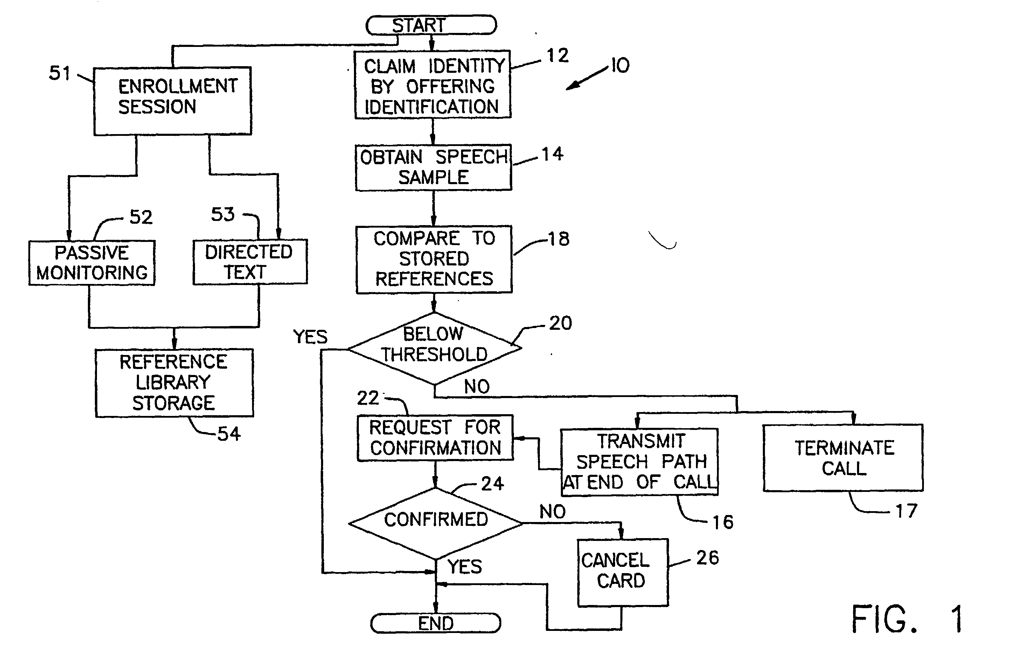

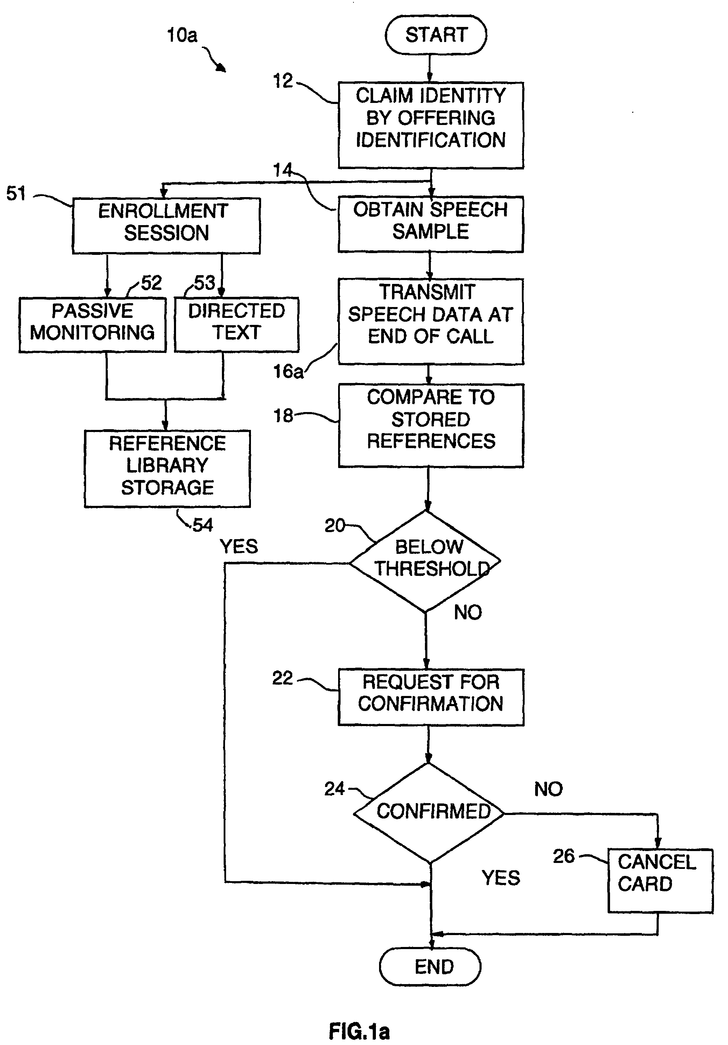

FIG. 1 and 1a illustrate a flow charts 10, 10a depicting personal identity verification using speaker identification in connection with a long distance calling card service. In block 12, a person claims an identity by offering some information corresponding to a unique identification. For example, a long distance telephone subscriber may enter a unique ID number to claim his identity. Alternatively, if the user is utilizing a public telephone with a magnetic card reading capability, the ID number may be encoded on a magnetic strip on the card and read by passing the card through a reader.

Like current interactive verification methods, passive monitoring requires one or more enrollment or training sessions 51 with which to form a voice model for the customer. This enrollment session 51 may contain requests of identity as described for block 12, and therefore directly be entered upon start (Fig.1) or as shown in Fig.1a may be entered after claiming identity in block 12. For this purpose of the enrollment session 51, the customer may be asked to speak a reference sentence, directed text 53 over his telephone to a central location. Preferably, however, in order to eliminate any burden on the part of the customer, the first telephone call or calls made using the card could be used as enrollment sessions, with verification applied to subsequent calls with passive monitoring 52. A library of reference messages is thus established at a central location in a reference library storage 54, to maintain a voice standard for each individual long distance telephone credit card subscriber. The reference messages may be stored in any conventional manner, such as, for example, on magnetic disks.

In block 14, the personal identity verification system of the present invention obtains a speech sample message from the calling party. At this stage, the speech sample message may be compared, in a manner to be described later, to reference data stored during a previous enrollment session in order to confirm whether the caller is indeed the calling card account holder. Naturally, the impact of a false rejection depends upon what action is taken next. Generally, only about one minute of the customer's speech need be monitored before a reliable decision (minimizing false rejections) can be reached.

After a comparison has been made, the call may be terminated immediately if the input speech utterances and reference speech data do not match.

A certain number of false rejections, however, must be anticipated despite the improvements in accuracy obtained by abandoning the assumed statistical model approach employed in prior art systems. At a minimum, terminating a valid call will annoy the caller. Potentially, it may also result in the loss of business. Therefore, a safer action would be to request the card-holder to confirm that the call was made (as quickly after the call as possible), and to invalidate the card number if the call was denied.

Thus alternative ways of reaction may be realized.

According to Fig.1, the speech sample is compared to the reference data, as shown in block 18, in accordance with a passive monitoring algorithm to be described later. If the match between the reference voice sample and the input speech utterance does not satisfy the decision criteria in decision block 20, the call may be immediately terminated, as shown in block 17 or alternatively in block 16 the transmit speech path at end of call is initiated. This step will be followed by a request for confirmation to be described later in connection with Fig.1a.

Accordingly, the ability to interrupt calls in progress is not necessarily required, and in the illustrated embodiment of Fig. 1a the caller speech data is transmitted to the central facility 10a at the end of each call, as shown in block 16a. The speech sample is then compared to the reference data, as shown in block 18, in accordance with a passive monitoring algorithm to be described later. If the match between the reference voice sample and the input speech utterance does not satisfy the decision criteria in decision block 20, the customer is requested to confirm whether the call was made or authorized by him, as shown in block 22. If the answer is yes, no action is taken (block 24), but if the answer is no, the card is cancelled and a new one is issued to the customer (block 26).

It will, of course, be appreciated by those of ordinary skill in the art that if the ability to interrupt calls in progress is required, the system receiving the caller speech data during the call as shown in and to terminate the call if the identity offered by the calling party is not accepted, is the preferred embodiment.

Passive Monitoring Algorithm

In accordance with the present invention, a text-independent, non-parametric approach to speaker recognition is used in which the reference data used to characterize the telephone credit card customer's speech patterns are a large set of speech feature vectors, not a set of estimated distribution parameters. A baseline algorithm for such a text-independent approach is described in U.S. Patent 5,271,088, which is a continuation of US Patent Application Serial No. 07/992,139 filed on April 7, 1993 by L. G. Bahler, which is a continuation of U.S. Patent Application Serial No. 07/699,217 filed 5/13/91, entitled "AUTOMATED SORTING OF VOICE MESSAGES THROUGH SPEAKER SPOTTING" and assigned to ITT, the assignee herein.

In accordance with the algorithm disclosed in the aforementioned application, speech is converted into a non-parametric form in which the sound spectrum within each 20 millisecond "frame" is measured by a 14-dimensional vector. Speech utterances are represented as collections of these vectors. An algorithm is defined by which a reference utterance is compared with input utterances from a group of speakers, one of which speakers has claimed the identity of the customer. This comparison results in a decision to accept or reject the hypothesized identity. Passive monitoring is accomplished by applying the algorithm disclosed in the Bahler application to the speech of the calling party. The identity hypothesis to be tested is derived from the calling card.

Audio Speech Signal Processing

If desired, the user can be required to supply a voice sample which will serve as the reference model for future comparison in accordance with the present invention. As indicated above, however, the first telephone call or calls made using the long distance calling card are preferably used as the enrollment session(s). Thus, users of the system are not requested to supply an initial reference speech sample.

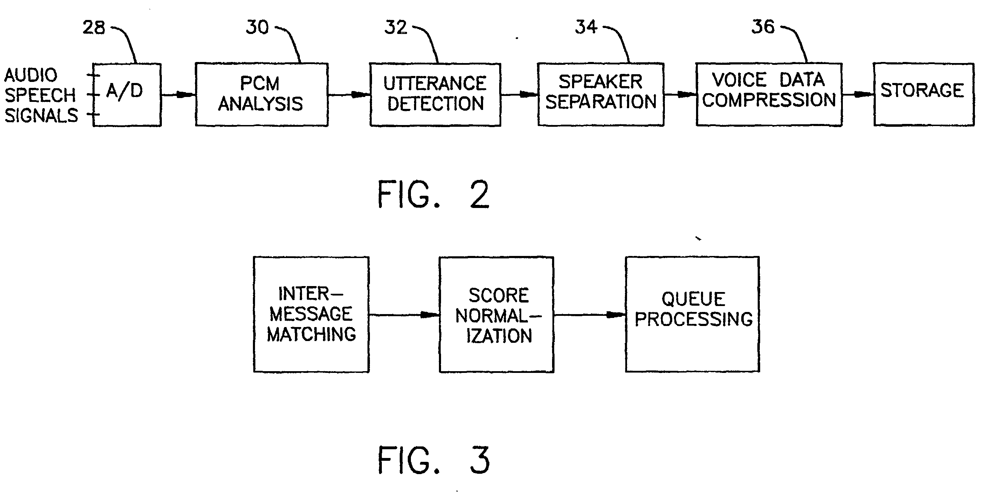

The present invention utilizes a speaker recognition system which may be of any known construction. Accordingly, as shown in FIG. 2, both the enrollment speech and the caller speech to be verified is digitized, using an A/D converter 28, into a series of frames of digital data at a given sampling rate. The digitized speech is subjected to speech front-end processing, i.e. pulse code modulation (PCM) in circuit 30. In a known manner, utterance detection circuit 32 estimates a speech utterance level parameter from RMS energy (computed during each 20 msec frame) using fast upward adaptation and slow downward adaptation. The utterance detection threshold is determined from a noise level estimate and a predetermined minimum speech utterance level. The end of an utterance is declared when the speech level estimate remains below a fraction (for example .10) of the peak speech utterance level for a predetermined interval (for example 500 ms).

In the telephone network, conversations are transmitted in one of two types of circuits. In a "two wire" circuit, the voices of the two parties are mixed so that both sides are present on a single wire pair. Techniques of the separation of the speech signals in two wire circuits are well known in the art and are discussed in a variety of references. Modem digital telephone switches employ "four wire" circuits. In a four wire circuit, the voices of the two parties are isolated on separate wire pairs. This is an ideal situation for passive monitoring because only the line should contain only the voice to be verified. In actual practice, however, the four-wire circuits often deviate from ideal behavior by introducing some amount of "crosstalk" between the two parties. Crosstalk causes an attenuated signal from the called party to be present in the circuit assigned to the calling party.

In accordance with the present invention cross talk is eliminated by speaker separation circuit 34, to an extent adequate to obtain reliable speech data and thus monitor the calling party, by measuring the signal energy in each of the two paired circuits at predetermined intervals using windows of a fixed duration. By way of example, the signal energy may be measured every 20 milliseconds using 30 millisecond signal windows. If the energy in the circuit of the calling party is greater than that of the called party, the window is accepted as belonging to that of the called party. If the signal energy is less than that of the called party, it is rejected as cross talk.

Preferably, after speaking separation has been performed, the speech data should be compressed as much as possible to minimize transmission costs. An effective method of compressing the data is to perform the "pre-processing" portion of the Bahler baseline algorithm described in U.S Patent 5,271,088. To facilitate compression prior to transmission to a central data storage facility, pre-processing is preferably performed at the local telephone switch of the calling party, as shown in block 36. The main functions of the pre-processing procedure are feature extraction, where frame amplitude and filter bank parameters are derived from the incoming speech signal, frame selection, and spectral amplitude enhancement. Each of the main functions is described below.

In feature extraction, a feature extraction circuit computes frame amplitude and filterbank parameters from each 20 msec frame to PCM data. The speech signal is sampled M times per second and converted to a 16-bit linear digital representation. This sampled data is processed by performing a 256-point DFT every twenty milliseconds (96 point overlap). A Hamming window is used, without preemphasis. Fourteen spectral channels are extracted from this analysis by forming weighted sums of individual DFT spectral power values. The fourteen channels span approximately 300 to 3500 Hertz and are constant bandwidth up to approximately 1000 Hertz, and constant Q thereafter. Each channel has very sharp cutoff (sharper at the upper boundary than at the lower), and crossover is at about the two dB point. Channel weighting is such that white noise input causes equal output in each channel. The frame power is computed by summing the power in all DFT channels and converting the result to dB.

The spectral channel is normalized by first taking the fourth root of each channel power, and $I_2$-normalizing the fourteen component vector of spectral values. The fourth root used in these parameters was suggested by studies of the perception of loudness, and is very similar to a logarithmic transformation over the dynamic range of interest. The channel bandwidths and placements roughly correspond to equal intervals on the mel scale of frequencies. These parameters are used in many applications of speech and speaker recognition, and they are generally found to be robust with respect to noise degradation.

In frame selection, three criteria are imposed to limit the set of frames on which the algorithm operated. First, frames of very low power are eliminated, in order to consider only that portion of the data set that may contain speech. A histogram of power is then formed using all remaining frames in the reference utterance. A nominal interval of acceptable energies is established as the range from the tenth percentile value plus six dB to the 97th percentile minus three dB. If that nominal range is six dB wide or wider, only those frames with energies within it are used. Otherwise, the passing range is widened to six dB of dynamic range in the speech data, but eliminates regions of probable degradation due to extreme clipping and/or noise, if sufficient dynamic range is present in the original data.

The spectral changes across frequency are enhanced by subtracting from each spectral amplitude the neighboring spectral amplitudes, circularly. Hence,

$$s_1' = s_1 - s_2$$

$$.$$

$$.$$

$$s_i' = s_i - s_{i+1}$$

$$.$$

$$.$$

$$s_{14}' = s_{14} - s_1$$

The reference speech data for the telephone credit card account customers and the speech data derived from the speech of the calling party are subjected to the above described pre-processing procedure. Pre-processing of the calling party speech data at the local telephone switch eliminates silence periods and reduces the data to the parametric form discussed above. The speech of the calling party, or data derived from it, can be transmitted to the facility at the end of the call. A further method of compressing the data, "novelty pruning", may also be applied to input utterances and reference utterances. In novelty pruning, each frame in the utterance is considered in turn. The first frame is always saved. The second frame is compared with the first frame to determine the Euclidean distance between the two frame vectors. If the Euclidean distance exceeds a predetermined threshold value, the second frame is also saved; otherwise it is discarded. In like fashion, each subsequent frame is compared with all the frames that have been previously saved. Thus, if the Euclidean distance between each succeeding frame and every saved frame preceding it exceeds the threshold, the new frame is saved.

Together, the pre-processing, speaker separation, and novelty pruning steps discussed above substantially reduce the amount of data that must be transmitted and therefore the cost of transmission. The resulting data may be transmitted on a data grade line as opposed to a speech grade line, further reducing the cost Before analyzing the pre-processed caller speech data in accordance with the remaining steps of the Bahler algorithm described in U.S. Patent 5,271,088, a caller speech data base is to be collected over a group of users. Since the speech database is to be used in connection with a telephone network, the database speech will be collected over the long distance network to provide for the variations and handset microphones and signal distortions due to the telephone channel. As indicated previously, the reference speech is collected from each customer over a number of conversational telephone sessions in a non-invasive manner so that the customer need not recite or repeat any predetermined authorization phrase.

The compressed reference speech data for all customers, as well as the compressed caller speech data, is stored in a data base at a central facility as shown in block 38 (Fig.2). In accordance with the Bahler algorithm, non parametric algorithms are developed for spotting the occurrences of one or more known, "target" talkers within the caller speech database. Target talkers, in the context of the long distance telephone network, are authorized account holders or users of the long distance phone service whose reference speech data has been compressed and stored in the data base. For purposes of verification, reference speech data from one or more of the account holders whose identity has been claimed by one or more callers is used. The caller speech data consists of any number of callers, for example 50, including at least one caller who claimed the identity a long distance service customer and is represented in the reference speech data.

FIG. 3 is a block diagram of the baseline algorithm showing the processing steps on inter-message matching, score normalization, and queue processing. Caller speech data samples are sampled from a potentially open population of callers, using the unrestricted, extemporaneous speech spoken during their respective calls. The algorithm processes the speech samples in a queue, producing a score for each sample. The score is used to reorder the samples in the queue so that the sample containing "key" events is more likely to appear at the front of the queue than at the rear. The sorting algorithm is embedded in an integrated software system capable of accepting digitized waveform files as input. Rather than sorting voice models given an input sample, the sorting algorithm attempts to sort caller speech input samples in search of a given voice, that of the authorized user whose identity is being claimed by the unknown caller, Pairings of reference voice models and input caller speech samples are ranked in order of the probability that the voice model matches the owner of a particular calling card number, given the acoustic observations. The comparison provides a score related to the likelihood of the observations being produced by the calling card customer. The manner in which these and other properties of the baseline algorithm are obtained will now be described.

Inter-Message Matching

In accordance with the Bahler algorithm, the parameter space has thirteen dimensions and the reference data consists of at most several thousand frames per message. Under these conditions, the square of the nearest neighbor distance not only correlates well with the logarithm of the local density, but the two are also approximately related by the affine transformation:

$$-\log(P_R(u)) = a + bd_{NN}^2$$

for sum constants a and b. The square of nearest neighbor distances is the appropriate value to accumulate to approximate likelihood ratio scoring. Recognizing this as the basis for accumulating the square of the nearest neighbor distances, the following relations are given:

$$d_{u,R} = -\log(p_R(u)) = -\log(p(u|R)) = -\log[p(u,R)/p(R)]$$

$$d_{r,U} = -\log(p_U(r)) = -\log(p(r|U)) = -\log[p(r,U)/p(U)]$$

where $p_R(u)$ is the probability density of the reference message at u, $p_u(r)$ is the probability density of the unknown message at r, and the approximation now includes the affine shift and scale effects of a and b. The $d_{u,R}$ and $d_{r,U}$ are averaged to from the Score values because averaging normalizes the message length and reduces sensitivity to the lack of independence between frames. The Score values are thus approximations of conditional probabilities:

$$Score_A = ave_{ucU}[-\log(p_R(u))] = -\log(p(U|R)) = -\log[p(U,R)/P(R)]$$

$$Score_B = ave_{rcR}[-\log(p_U(r))] = -\log(p(R|U)) = -\log[p(R, U)/P(U)]$$

where $p(U,R)$ is thought of as the probability that unknown message U and reference message R were spoken by the same talker. In view of the approximate affine relationship of the Score values to the conditional probabilities exhibited above, summing them produces:

$$Score_A + Score_B = \alpha' + \beta'\log[p(U,R)^2/p(R)p(U)]$$

where $\alpha'$ and $\beta'$ are related to a and b in an obvious way. This is the meaning of the match scores before they are modified by score normalization.

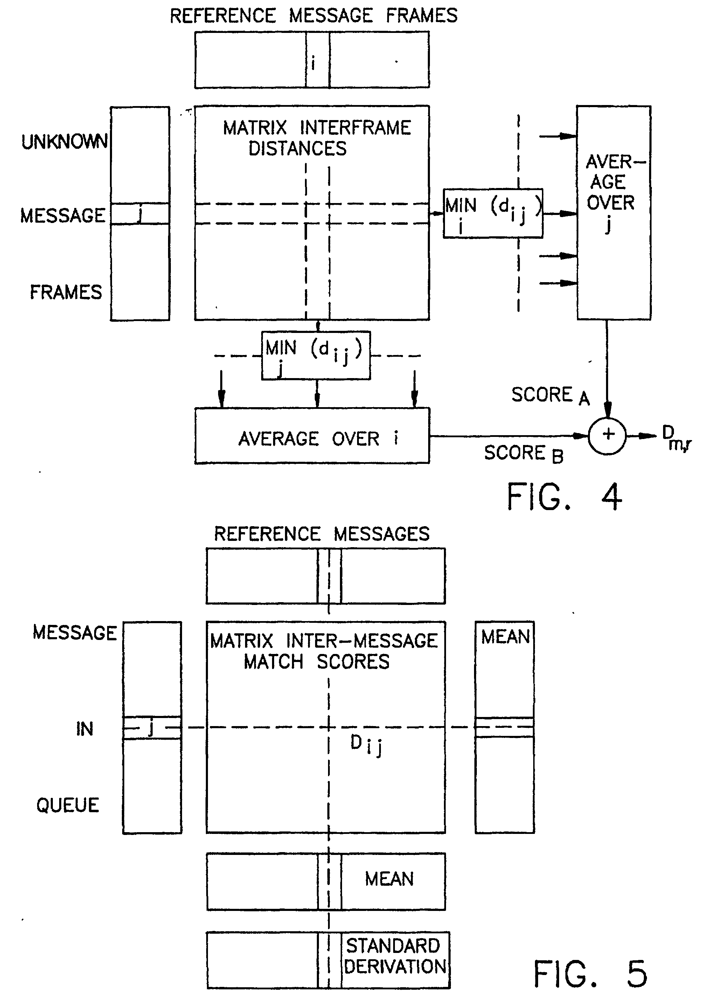

FIG. 4 is a schematic diagram illustrating the message matching and scoring process. The term "unknown message" is intended to refer to a caller speech sample while the term "unknown" message is intended to refer to a caller speech sample. Match scores are computed for a combination of unknown and reference messages in two steps. First, each frame of the unknown is compared to every frame of the reference message and given a score equal to the minimum Euclidean squared distance between the unknown and all reference frames. $Score_A$ is set equal to the average of these values over all frames of the unknown message. Next, the same process is repeated, but comparing each frame of the reference to all frames of the unknown, to form $Score_B$. The match score assigned to the comparison of this combination of unknown and reference messages is then the sum of $Score_A$ and $Score_B$. Stated mathematically, this process is summarized as follows. If we let $u_j$ be the j-th frame of the unknown message U and $r_i$ be the i-th frame of reference message R, the "distance" from $u_j$ to the reference message is:

$$d_{j,R} = \min[|u_j-r_i|^2]$$

and the "distance" from $r_i$ to the unknown message U is:

$$d_{i,U} = \min[|u_j-r_i|^2]$$

The resulting scores are:

$$Score_A = ave[d_{j,R}]$$

$$Score_B = ave[d_{i,U}]$$

The remaining processing operates on scores found by "matching" the messages in the message queue of unknown messages against the reference speech data of the authorized long distance account holder or user whose identity is being verified. The presence of $P(R)$ and $P(U)$ in the expression above also indicates that proper interpretation and use of the scores has to take into consideration speaker a priori probabilities and unconditional message probabilities, which justifies the need for further normalization.

Score Normalization

The speaker scoring algorithm incorporates three especially important normalization procedures: scoring relative to a representative set of callers; normaliza tions with respect to unconditional message probability; and removal of biases due to inference data variability. The first two normalizations are obtained using reference data for a representative set of talkers, which may often include data for non-target speakers. The third normalization is achieved by using z scores.

Referring to FIG. 5, normalization of raw message-to-message match scores with respect to a group of reference talkers, which is accomplished by forcing the rows of the raw score matrix to zero, normalizes scores with respect to the unconditional probability of the message. Rational comparison of one message's likelihood of having been spoken by a target talker to that of another message requires such a normalization, and is done by de-meaning each row. It is critical, however, that this normalization be done with respect to a large enough sample of reference talkers to avoid accidentally destroying information in the raw scores.

Use of the negative z score, which normalizes scores with respect to the variance of scores over the message queue, takes into account the observed fact that reference messages usually have an inherent bias which manifests itself as a propensity toward larger or smaller score values against all messages, whether by the same talker or not. In implementation, match scores are computed, for each caller speech message to be verified, in the queue against each reference message (i.e., reference data of one or more account holders whose identity has been used to make a call), as shown in Figure 4. Treating this set of match scores as a matrix, one column per reference message and one row per caller speech message in the queue, the scores are first normalized across rows by subtracting the constant for each row which reduces its mean to zero. This is the very important normalization of the scores with respect to target talkers and reference talkers. Scores are then normalized within in columns, by replacing each with its negative z score relative to the column mean and variance. These two normalizations can be expressed mathematically as follows. Let the original scores in the (Message queue)x(Reference messages) matrix be denoted $d_{m,r}$. Then:

$$d_{m,r} = \text{Score}_A (U_m, R_r) + \text{Score}_B (U_m, R_r)$$

The result of normalization with respect to the reference set is replacement of dm,r by $d'_{m,r'}$ where

$$d'_{m,r'} = d_{m,r} - \frac{1}{|R|} \sum_{r=1}^{|R|'} d_{m,r'}$$

and the final score for each message in the queue and each reference message is:

$$d''_{m,r} = - \frac{d'_{mr} - <d'_{m,r}> m}{\sqrt{Var_m(d'_{m,r})}}$$

where $<d'_{m,r}>m$ is the mean of the score column for reference message r and $var_m(d'_{m,r})$ is the variance of the scores in that column.

Queue Processing

A queue is sorted on the basis of a set of z scores for each reference message in the queue and the target caller or callers whose speech is to be verified. Each target caller is given a match score against each reference message in the queue equal to the average of all normalized match scores for his reference data against that message. This produces a matrix of scores of each queue message against the target caller.

Queues are then sorted as follows. If the speech of only one caller is to be identified at a time, the queue is ordered on descending values of the (single) final score value, larger scores indicating greater posterior probability of the talker. When the speech of more than one talker is to be verified at a time, each queue message is given a target set score by treating the message/talker scores as proportional to the logarithm of the Bayes ratio, i.e., the conditional probability of the unknown message, given the talker, divided by the unconditional probability of the message. The score given to each message for the whole target talker set (consisting of callers whose speech is to be verified) is then:

$$S_m = \sum_{kT} e^{S_{m}} \ Pi$$

where T is the set of target talkers, k is a constant, $S_{m,t}$ is the message/talker score for message m and talker t, and $P_t$ is the a priori probability that talker t is in the queue. The queue is sorted on descending values of this sum, with larger values indicating greater likelihood that a message in the queue is from one of the target talkers.

Passive monitoring practiced in accordance with the present invention would be most cost effective if applied to selected calls. Fraud is concentrated in specific geographic areas and limited to a small number of customers. The greatest losses, for example, are incurred in overseas calls. Often, fraudulent activity causes sudden increases relative to customer's normal rates of long-distance usage. Criteria based upon these facts could be used to select calls to be monitored in accordance with the aforementioned algorithm. The fact that passive monitoring is "invisible" to the caller increases the effectiveness of monitoring calls selected at random.

**Claims**

1. A method of verifying that a person using a telephone network has an identity corresponding to one of a plurality of previously established identities, having associated reference frames of speech, comprising the steps of:

   storing reference frames of speech (51 to 54) for a plurality of persons, each said reference speech frame including a plurality of speech feature vectors, said speech feature vectors being non-parametric in nature;

   establishing a claimed identity (12) for a person seeking verification;

   passively monitoring a unrestricted, extemporaneous conversation via said telephone network between said person seeking verification and a called party to obtain a sample of said person's speech (14), said speech sample being thereafter processed into frames of speech; and

   comparing (18, 20) said sample with at least one reference set to determine whether said person seeking verification corresponds to said claimed identity (12),

   wherein said comparison includes generating a match score derived from a determination of nearest neighbor Euclidean distance between frames of speech associated with said speech sample and frames of said reference speech..

2. The method according to claim 1, further including the step of forming each reference frames by passively monitoring at least one conversation over said telephone network between a person established as having said claimed identity and a called party.

3. The method according to claim 2, wherein voice signals indicative of the identity of a person are digitized into a series of frames of digital data indicative of person's speech features during said obtaining step.

4. The method according to claim 1, wherein the sample is compared to the reference frame of a person whose identity is claimed by said person seeking verification.

5. The method according to at least one of claims 1 or 4, further including repeating said passive monitoring step for a conversation made over said telephone network by at least one additional person established as having another claimed identity to obtain a respective sample of said at least one additional person's speech.

6. The method according to at least one of claims 4 or 5, further including the step of digitizing said samples into respective frame sets of unknown speech data during said passive monitoring step prior to said comparing step and wherein speech features from said unknown frame sets are compared to speech features of at least one reference set during said comparing step.

7. The method according to claim 6, wherein speech features obtained during said digitizing step are compared to a plurality of reference sets during said comparing step.

8. The method according to claim 1, wherein the step of passive monitoring includes digitizing a speech sample indicative of unrestricted, extemporaneous speech made over said telephone network by said person seeking verification into a frame set of unknown speech features.

9. The method according to claim 8, wherein said passive monitoring step includes compressing digitized frame sets of unknown speech features indicative of speech by a person seeking verification and storing compressed speech feature data at a central facility.

**10.** The method according to claim 9 further including the step of selecting speech frames for storage depending upon expected speech information contained therein.

**11.** The method according to claim 9, further including the step of selecting a first frame of each set of sampled speech features for storage and selecting subsequent frames of each set only if the Euclidean distance between each succeeding frame and every saved frame preceding it exceeds a predetermined threshold.

**12.** The method according to claim 1, further including generating a match score which is a sum of a Score$_A$ set equal to the average of the minimum Euclidean squared distance between a speech frame of an unknown person and all frames of a customer reference set over all sampled frames of said unknown persons, and Scores set equal to the average of the minimum Euclidean squared distance between each frame of the customer reference set to all frames of said unknown persons,
wherein the "distance" from U$_j$ to reference message R is:

$$d_{j,R} = \min [|u_j - r_i|^2]$$

and the distance from ri to the unknown message U is:

$$d_{i,U} = \min [|u_j - r_i|^2]$$

wherein u$_j$ is the j-th frame of unknown message U and r$_i$ is the i-th frame of reference message R and

$$Score_A = ave [d_{j,R}]$$

$$Scores = ave [d_{i,U}]$$

prior to said comparing step.

**13.** The method according to claim 1, further including the step of measuring the signal energy in each of two paired circuits during said passive monitoring step, one of said circuits corresponding to said unknown person and the other of said circuits corresponding to a party called by said unknown person, during each phone call being monitored at predetermined intervals using windows of a fixed duration and accepting only windows in which the energy in the circuit of the calling person is greater than that of the called party.

**14.** The method according to at least one of claims 1 to 13, wherein said passive monitoring step is performed at a local switching station.

**15.** An apparatus for verifying that a persons using a telephone network has an identity corresponding to one of a plurality of previously established identities, comprising:

means for storing reference frames of speech for a plurality of persons, each of said persons being associated with one of said plurality of previously established identities, each said reference speech frame including a plurality of speech feature vectors, said speech feature vectors being non-parametric in nature;

means for establishing a claimed identity for a person seeking verification;

means for passively monitoring a conversation via said telephone network between said person seeking verification and a called party to obtain a sample of said person's speech, said speech sample being thereafter processed into frames of speech; and

means for comparing (18, 20) said sample with at least one reference set to determine whether said person seeking verification corresponds to said claimed identity (12),

including means for generating a match score (D$_{m,r}$) derived from a determination of nearest neighbor Euclidean distance between frames of speech associated with said speech sample and frames of said reference speech..

16. The apparatus of claim 15, wherein said passive monitoring means comprising digitizing means for digitizing speech signals for each of said plurality of persons into said reference speech frames and for digitizing speech signals from unrestricted, extemporaneous caller speech made during calls on said telephone network by said person seeking verification into said sample speech frame.

17. The apparatus of claim 16, wherein said passive monitoring means further includes means for processing said digitized speech signals into respective sets of speech feature vectors and means for comparing speech features of said person seeking verification with speech feature vectors of at least one of said plurality of persons.

18. The apparatus according to claim 17, wherein said processing means is adapted to characterize speech features of said person seeking verification and said plurality of persons as a non-parametric set of speech feature vectors.

19. The apparatus according to claim 17, wherein said comparing means comprises means for performing a non-parametric comparison of a set of speech feature vectors corresponding to said person seeking verification to a reference set of speech features corresponding to a person whose identity is claimed by said person seeking verification.

20. The apparatus according to claim 17, wherein said processing means further includes means for selecting a first frame of each set of sampled speech features for storage and for selecting subsequent frames of each set only if the Euclidean distance between each succeeding frame and every saved frame preceding it exceeds a predetermined threshold.

21. An apparatus for verifying that a person using a telephone network has an identity corresponding to one of a plurality of previously established identities having associated reference frames of speech, comprising:

means (28, 30, 32, 34,) for receiving unrestricted, extemporaneous input speech from said person seeking verification;
means (36) for coding the input speech into a non-parametric set of speech feature vectors; and
means for performing a non-parametric comparison of a set of speech features corresponding to said person seeking verification to a reference frame of speech features corresponding to the identity of the person claimed by said person seeking verification

22. A method for verifying that a person using a telephone network has an identity corresponding to one of a plurality of previously established identities having associated reference frames of speech, comprising the steps of:

receiving unrestricted, extemporaneous input speech from said person seeking verification;
coding the input speech into a non-parametric set of speech feature vectors; and
performing a non-parametric comparison of a set of speech features corresponding to said person seeking verification to a reference frame of speech features corresponding to the identity of the person claimed by said person seeking verification.

**Patentansprüche**

1. Eine Methode zur Verifizierung, dass eine Person, die ein Telefonnetz nutzt, eine Identität hat, die einer von mehreren, vorab eingerichteten und mit zugehörigen Referenzsprachrahmen hinterlegten Identitäten entspricht, wobei die Methode folgende Schritte umfasst:

speichern von Referenzsprachrahmen (51 bis 54) für mehrere Personen, wobei jeder Referenzsprachrahmen mehrere Sprachmerkmalvektoren hat und jeder Sprachmerkmalvektor nicht parametrisch ist;

Einrichten einer beanspruchten Identität (12) für eine Person, die eine Verifizierung wünscht;

Passives Überwachen eines unbeschränkten spontanen Gesprächs über das Telefonnetz zwischen der Person, die eine Verifizierung wünscht, und einer angerufenen Partei, um ein Muster der Sprache (14) dieser Person zu erhalten, wobei dieses Sprachmuster danach in Sprachrahmen verarbeitet wird; und

Vergleichen (18, 20) dieses Musters mit mindestens einem Referenzsatz zur Bestimmung, ob die Person, die eine Verifizierung wünscht, ihrer beanspruchten Identität (12) entspricht, wobei das Vergleichen auch das Erzeugen eines von einer Bestimmung der nächsten benachbarten euklidischen Entfernung zwischen Sprachrahmen, die mit dem Sprachmuster und den Referenzsprachrahmen in Verbindung stehen, abgeleiteten Abgleichergebnisses umfasst.

2. Die Methode nach Anspruch 1, die ferner den Schritt des Bildens der Referenzrahmen durch passives Überwachen mindestens eines Gespräches über das Telefonnetz zwischen einer Person, deren beanspruchte Identität festgestellt wurde, und einer angerufenen Partei umfasst.

3. Die Methode nach Anspruch 2; wobei Sprachsignale, die auf die Identität einer Person hinweisen, in eine Reihe von Rahmen digitaler Daten digitalisiert werden, die auf Sprachmerkmale der Person während des Schrittes des Erhaltens des Musters hinweisen.

4. Die Methode nach Anspruch 1, wobei das Muster mit dem Referenzrahmen einer Person verglichen wird, deren Identität von der Person beansprucht wird, die eine Verifizierung wünscht.

5. Die Methode nach mindestens einem der Ansprüche 1 oder 4, die ferner das Wiederholen des Schrittes des passiven Überwachens für ein Gespräch über das Telefonnetz durch mindestens eine zusätzliche Person, deren andere beanspruchte Identität festgestellt wurde, um ein entsprechendes Muster der Sprache mindestens einer zusätzlichen Person zu erhalten, umfasst.

6. Die Methode nach mindestens einem der Ansprüche 4 oder 5, die ferner den Schritt des Digitalisierens der Muster in entsprechende Rahmensätze von unbekannten Sprachdaten während des passiven Überwachens vor dem Vergleichen umfasst, wobei die Sprachmerkmale der unbekannten Rahmensätze mit den Sprachmerkmalen mindestens eines Referenzsatzes während dem Schritt des Vergleichen verglichen werden.

7. Die Methode nach Anspruch 6, wobei die während dem Schritt des Digitalisierens erhaltenen Sprachmerkmale mit mehreren Referenzsätzen während dem Schritt des Vergleichens verglichen werden.

8. Die Methode nach Anspruch 1, wobei der Schritt des passiven Überwachens das Digitalisieren eines Sprachmusters, das auf ein unbeschränktes, spontanes Gespräch über das Telefonnetz durch die Person, die eine Verifizierung wünscht, hinweist, in einen Rahmensatz unbekannter Sprachmerkmale umfasst.

9. Die Methode nach Anspruch 8, wobei der Schritt des passiven Überwachens das Komprimieren der digitalisierten Rahmensätze aus unbekannten Sprachmerkmalen, die auf ein Gespräch einer Person, die eine Verifizierung wünscht, hinweist, und das Speichern der komprimierten Sprachmerkmalsdaten in einer zentralen Einrichtung umfasst.

10. Die Methode nach Anspruch 8, die ferner den Schritt des Auswählens von Sprachrahmen zur Speicherung je nach den erwarteten enthaltenen Sprachinformationen umfasst.

11. Die Methode nach Anspruch 9, die ferner den Schritt des Auswählens eines ersten Rahmens jedes Satzes von erfassten Sprachmerkmalen zur Speicherung und Auswahl von folgenden Rahmen jedes Satzes umfasst, jedoch nur, wenn die euklidische Entfernung zwischen jedem folgenden Rahmen und jedem vorhergehenden gespeicherten Rahmen eine vorgegebene Grenze überschreitet.

12. Die Methode nach Anspruch 1, die ferner das Erzeugen eines Abgleichergebnisses umfasst, der die Summe eines Ergebnisses$_A$, das gleich dem Durchschnitt der ins Quadrat erhobenen minimalen euklidischen Entfernung zwischen einem Sprachrahmen einer unbekannten Person und allen Rahmen eines Kundenreferenzsatzes über alle erfassten Rahmen der unbekannten Personen ist, und eines Ergebnisses$_B$ ist, das gleich dem Durchschnitt der ins Quadrat erhobenen minimalen euklidischen Entfernung zwischen jedem Rahmen des Kundenreferenzsatzes ist, der sich auf alle Rahmen der unbekannten Personen bezieht, wobei die "Entfernung" von $u_j$ zur Referenznachricht R

**EP 0 643 520 B1**

$$d_{jR} = \min [|u_j - r_i|^2]$$

ist
und die Entfernung von $r_i$ zur unbekannten Nachricht U

$$d_{iU} = \min [|u_j - r_i|^2]$$

ist,
wobei $u_j$ der j-ste Rahmen der unbekannten Nachricht U und $r$; der i-ste Rahmen der Referenznachricht R ist und

$$\text{Ergebnis}_A = \text{Durchschnitt } [d_{j,R}]$$

$$\text{Ergebnis}_B = \text{Durchschnitt } [d_{i,U}]$$

vor dem Schritt des Vergleichens ist.

13. Die Methode nach Anspruch 1, die ferner den Schritt des Messens der Signalenergie in jedem von zwei gepaarten Schaltkreisen während dem Schritt des passiven Überwachens umfasst, wobei ein Schaltkreis der unbekannten Person und der andere Schaltkreis einer von der unbekannten Person angerufenen Partei entspricht, wobei bei jedem überwachten Telefonanruf in vorbestimmten Intervallen Fenster einer festen Dauer verwendet werden und nur Fenster akzeptiert werden, in denen die Energie im Schaltkreis der anrufenden Person größer als die der angerufenen Partei ist.

14. Die Methode nach mindestens einem der Ansprüche 1 bis 13, wobei der Schritt des passiven Überwachens an einer örtlichen Schaltstelle durchgeführt wird.

15. Eine Vorrichtung zum Verifizieren, dass eine Person, die ein Telefonnetz nutzt, eine Identität hat, die einer der vorher eingerichteten Identitäten entspricht, wobei die Vorrichtung folgende Teile umfasst:

    Mittel zur Speicherung von Referenzsprachrahmen für mehrere Personen, wobei jede Person mit einer der mehreren, vorher eingerichteten Identitäten in Verbindung steht, wobei jeder Referenzsprachrahmen mehrere Sprachmerkmalvektoren hat, wobei die Sprachmerkmalvektoren nicht parametrisch sind;

    Mittel zur Einrichtung einer beanspruchten Identität für eine Person, die eine Verifizierung wünscht;

    Mittel zur passiven Überwachung eines Gesprächs über das Telefonnetz zwischen der Person, die eine Verifizierung wünscht, und einer angerufenen Partei, um ein Muster der Sprache dieser Person zu erhalten, wobei dieses Sprachmuster danach in Sprachrahmen verarbeitet wird; und

    Mittel zum Vergleichen (18, 20) des Musters mit mindestens einem Referenzsatz zur Bestimmung, ob die Person, die eine Verifizierung wünscht, ihrer beanspruchten Identität (12) entspricht, einschließlich eines Mittels zum Erzeugen eines Abgleichergebnisses ($D_{m,r}$), das von einer Bestimmung der nächsten benachbarten euklidischen Entfernung zwischen Sprachrahmen, die mit dem Sprachmuster und den Referenzsprachrahmen in Verbindung stehen, abgeleitet ist.

16. Die Vorrichtung nach Anspruch 15, wobei das Mittel zum passiven Überwachen ein Digitalisiermittel zum Digitalisieren von Sprachsignalen für jede der mehreren Personen in die Referenzsprachrahmen und zum Digitalisieren von Sprachsignalen von unbeschränkter, spontaner Sprache während Gesprächen über das Telefonnetz durch die Person, die eine Verifizierung wünscht, in den Mustersprachrahmen umfasst.

17. Die Vorrichtung nach Anspruch 16, wobei das Mittel zum passiven Überwachen ferner ein Mittel zum Verarbeiten der digitalisierten Sprachsignale in jeweilige Sätze von Sprachmerkmalvektoren und ein Mittel zum Vergleichen von Sprachmerkmalen der Person, die eine Verifizierung wünscht, mit Sprachmerkmalvektoren mindestens einer der mehreren Personen umfasst.

13

**EP 0 643 520 B1**

**18.** Die Vorrichtung nach Anspruch 17, wobei das Verarbeitungsmittel so ausgeführt ist, dass es Sprachmerkmale der Person, die eine Verifizierung wünscht, und die der mehreren Personen als einen nicht parametrischen Satz mit Sprachmerkmalvektoren kennzeichnet.

**19.** Die Vorrichtung nach Anspruch 17, wobei das Mittel zum Vergleichen ein Mittel zum Durchführen eines nicht parametrischen Vergleichs eines Satzes von Sprachmerkmalvektoren, die der Person entsprechen, die eine Verifizierung wünscht, mit einem Referenzsatz von Sprachmerkmalen umfasst, der einer Person entspricht, deren Identität von der Person beansprucht wird, die eine Verifizierung wünscht.

**20.** Die Vorrichtung nach Anspruch 17, wobei das Verarbeitungsmittel ferner ein Mittel zum Auswählen eines ersten Rahmens jedes Satzes mit erfassten Sprachmerkmalen zur Speicherung und Auswahl von folgenden Rahmen jedes Satzes umfasst, und zwar nur, wenn die euklidische Entfernung zwischen jedem folgenden Rahmen und jedem vorhergehenden gespeicherten Rahmen eine vorgegebene Grenze überschreitet.

**21.** Eine Vorrichtung zur Verifizierung, dass eine Person, die ein Telefonnetz nutzt, eine Identität hat, die einer von mehreren vorher eingerichteten Identitäten, mit denen Referenzsprachrahmen in Verbindung stehen, entspricht, und die folgendes umfasst:

Mittel (28, 30, 32, 34) zum Empfang von unbeschränktem, spontanem Spracheingang von der Person, die eine Verifizierung wünscht;

Mittel (36) zur Verschlüsselung des Spracheingangs in einen nicht parametrischen Satz von Sprachmerkmalvektoren.

Mittel zur Durchführung eines nicht parametrischen Vergleichs eines Satzes von Sprachmerkmalen, welcher der Person entspricht, die eine Verifizierung wünscht, mit einem Referenzrahmen von Sprachmerkmalen, welcher der Identität der Person entspricht, die von der Person, die eine Verifizierung wünscht, beansprucht wird.

**22.** Eine Methode zur Verifizierung, dass eine Person, die ein Telefonnetz nutzt, eine Identität hat, die einer von mehreren vorher eingerichteten Identitäten, mit denen Referenzsprachrahmen in Verbindung stehen, entspricht, und die die folgenden Schritte umfasst:

Empfang von unbeschränktem, spontanem Spracheingang von der Person, die eine Verifizierung wünscht.

Verschlüsselung des Spracheingangs in einen nicht parametrischen Satz von Sprachmerkmalvektoren.

Durchführung eines nicht parametrischen Vergleichs eines Satzes von Sprachmerkmalen, welcher der Person entspricht, die eine Verifizierung wünscht, mit einem Referenzrahmen von Sprachmerkmalen, welcher der Identität der Person entspricht, die von der Person, die eine Verifizierung wünscht, beansprucht wird.


**Revendications**

**1.** Procédé pour vérifier qu'une personne utilisant un réseau téléphonique a une identité correspondant à l'une parmi une pluralité d'identités établies préalablement, ayant des trames de référence de parole associées, comprenant les étapes suivantes:

mémorisation de trames de référence de paroles (51 à 54) pour une pluralité de personnes, chacune desdites trames de référence de paroles comprenant une pluralité de vecteurs de caractéristiques de paroles, lesdits vecteurs de caractéristiques de paroles étant non paramétriques par nature;

établissement d'une identité revendiquée (12) pour une personne en recherche de vérification;

surveillance passive d'une conversation libre et impromptue faite sur ledit réseau téléphonique entre ladite personne en recherche de vérification et un correspondant appelé pour obtenir un échantillon de paroles (14) de ladite personne, ledit échantillon de paroles étant traité ensuite pour obtenir des trames de paroles; et

**14**

comparaison (18,20) dudit échantillon à au moins un groupe de référence pour déterminer si ladite personne en recherche de vérification correspond à ladite identité revendiquée (12),

dans lequel ladite comparaison comprend la génération d'une note d'adaptation découlant d'une détermination de la distance euclidienne de proximité la plus rapprochée entre des trames de paroles associées audit échantillon de paroles et des trames desdites paroles de référence.

2. Procédé selon la revendication 1, comprenant en outre l'étape de formation de chaque trame de référence par la surveillance passive d'au moins une conversation faite sur ledit réseau téléphonique entre une personne reconnue comme ayant ladite identité revendiquée et un correspondant appelé.

3. Procédé selon la revendication 2, dans lequel lesdits signaux de voix significatifs de l'identité d'une personne sont numérisés sous la forme d'une série de trames de données numériques significatives des caractéristiques de paroles de la personne pendant ladite étape d'obtention.

4. Procédé selon la revendication 1, dans lequel l'échantillon est comparé à la trame de référence d'une personne dont l'identité est revendiquée par ladite personne en recherche de vérification.

5. Procédé selon au moins l'une quelconque des revendications 1 à 4, comprenant en outre l'étape de répétition de ladite étape de surveillance passive pour une conversation faite sur ledit réseau téléphonique par au moins une personne supplémentaire reconnue comme ayant une autre identité revendiquée pour obtenir un échantillon respectif des paroles de ladite au moins une personne supplémentaire.

6. Procédé selon au moins l'une des revendications 4 ou 5, comprenant en outre l'étape de numérisation desdits échantillons en groupes de trames respectifs de données de voix inconnues pendant ladite étape de surveillance passive préalablement à ladite étape de comparaison et dans lequel des caractéristiques de paroles provenant desdits groupes de trames inconnues sont comparés à au moins un groupe de référence pendant ladite étape de comparaison.

7. Procédé selon la revendication 6, dans lequel des caractéristiques de paroles obtenues pendant ladite étape de numérisation sont comparées à une pluralité de groupes de référence pendant ladite étape de comparaison.

8. Procédé selon la revendication 1, dans lequel l'étape de surveillance passive comprend la numérisation d'un échantillon de paroles significatif de paroles libres et impromptues dites sur ledit réseau téléphonique par ladite personne en recherche de vérification sous la forme d'un groupe de trames de caractéristiques de paroles inconnues.

9. Procédé selon la revendication 8, dans lequel ladite étape de surveillance passive comprend la compression de groupes de trames numérisées dé caractéristiques de paroles inconnues significatives de paroles dites par une personne en recherche de vérification et la mémorisation des données de caractéristiques de paroles compressées dans un poste central.

10. Procédé selon la revendication 9, comprenant en outre l'étape de sélection de groupes de trames pour la mémorisation en fonction de l'information de paroles attendue qui est contenue dans ces groupes de trames.

11. Procédé selon la revendication 9, comprenant en outre l'étape de sélection d'une première trame de chaque groupe de caractéristiques de paroles pour sa mémorisation et de sélection des trames suivantes de chaque groupe seulement si la distance euclidienne entre chaque trame suivante et chacune des trames sauvegardées qui la précèdent est supérieure à un seuil prédéterminé.

12. Procédé selon la revendication 1, comprenant en outre l'étape de génération d'une note d'adaptation qui est égale à la somme d'un groupe $Score_A$ égal à la moyenne du carré de la distance euclidienne minimale entre une trame de paroles d'une personne inconnue et toutes les trames d'un groupe de référence du client, en couvrant toutes les trames échantillonnées desdites personnes inconnues, et d'un groupe Scores égal à la moyenne du carré de la distance euclidienne minimale entre chaque trame du groupe de référence du client et toutes les trames desdites personnes inconnues,
dans lequel la "distance" entre $u_j$ et le message de référence R est égal à:

$$d_{j,R} = \min[|u_j - r_i|^2]$$

et la distance entre ri et le message inconnu U est égal à:

$$d_{i,U} = \min[|u_j - r_i|^2]$$

$u_j$ étant la j-ième trame du message inconnu U et $r_i$ étant la i-ième trame du message de référence R et

$$Score_A = moyenne[d_{j,R}]$$

$$Score_B = moyenne[d_{i,U}]$$

préalablement à ladite étape de comparaison.

**13.** Procédé selon la revendication 1, comprenant en outre l'étape de mesure de l'énergie du signal dans chacun des circuits à paire de fils pendant ladite étape de surveillance passive, l'un desdits circuits correspondant à ladite personne inconnue et l'autre desdits circuits correspondant à un correspondant appelé par ladite personne inconnue, pendant chaque appel téléphonique qui est surveillé à des intervalles de temps prédéterminés en utilisant des fenêtres de durée fixe et en acceptant seulement les fenêtres dans lesquelles l'énergie, se trouvant dans le circuit, du correspondant appelant est plus grande que celle du correspondant appelé.

**14.** Procédé selon au moins l'une des revendications 1 à 13, dans lequel ladite étape de surveillance passive est réalisée dans un autocommutateur local.

**15.** Appareil pour vérifier qu'une personne utilisant un réseau téléphonique a une identité correspondant à l'une d'une pluralité d'identités établies préalablement, comprenant:

des moyens de mémorisation des trames de référence de paroles pour une pluralité de personnes, chacune desdites personnes étant associée avec l'une parmi ladite pluralité d'identités établies préalablement, chacune desdites trames de référence de parole comprenant une pluralité de vecteurs de caractéristiques de paroles, lesdits vecteurs de caractéristiques de parole étant non paramétriques par nature;

des moyens pour établir une identité revendiquée pour une personne en recherche de vérification;

des moyens pour la surveillance passive d'une conversation faite sur ledit réseau téléphonique entre ladite personne en recherche de vérification et un correspondant appelé pour obtenir un échantillon de paroles de ladite personne, ledit échantillon de paroles étant traité ensuite pour obtenir des trames de paroles; et

des moyens pour comparer ledit échantillon à au moins un groupe de référence pour déterminer si ladite personne en recherche de vérification correspond à ladite identité revendiquée (12),

comprenant des moyens pour générer une note d'adaptation ($D_{m,r}$) découlant d'une détermination de la distance euclidienne de proximité la plus rapprochée entre des trames de paroles associées audit échantillon de paroles et des trames desdites paroles de référence.

**16.** Appareil selon la revendication 15, dans lequel lesdits moyens de surveillance passive comprennent des moyens de numérisation pour numériser des signaux de paroles pour chacune de ladite pluralité de personnes sous la forme desdites trames de paroles de référence et pour numériser des signaux de paroles provenant de paroles libres et impromptues de l'appelant dites pendant des appels faits sur ledit réseau téléphonique par ladite personne en recherche de vérification sous la forme de ladite trame de paroles d'échantillon.

**17.** Appareil selon la revendication 16, dans lequel les moyens de surveillance passive comprennent en outre des moyens pour traiter lesdits signaux de paroles numérisés pour obtenir des groupes respectifs de vecteurs de caractéristiques de paroles et des moyens pour comparer des caractéristiques de paroles de ladite personne en recherche de vérification à des vecteurs de caractéristiques de paroles d'au moins l'une parmi ladite pluralité de personnes.

18. Appareil selon la revendication 17, dans lequel lesdits moyens de traitement sont adaptés pour caractériser des caractéristiques de paroles de ladite personne en recherche de vérification et de ladite pluralité de personnes sous la forme d'un groupe non paramétrique de vecteurs de caractéristiques de paroles

19. Appareil selon la revendication 17, dans lequel lesdits moyens de comparaison comprennent des moyens pour réaliser une comparaison non paramétrique d'un groupe de vecteurs de caractéristiques de paroles correspondant à ladite personne en recherche de vérification à un groupe de référence de caractéristiques de paroles correspondant à une personne dont l'identité est revendiquée par ladite personne en recherche de vérification.

20. Appareil selon la revendication 17, dans lequel lesdits moyens de traitement comprennent en outre des moyens de sélection d'une première trame de chaque groupe de caractéristiques de paroles échantillonnées pour sa mémorisation et de sélection de trames suivantes de chaque groupe seulement si la distance euclidienne entre chaque trame suivante et chacune des trames sauvegardées qui la précèdent est supérieure à un seuil prédéterminé.

21. Appareil pour vérifier qu'une personne utilisant un réseau téléphonique a une identité correspondant à l'une parmi une pluralité d'identités établies préalablement, ayant des trames de référence de parole associées, comprenant:

des moyens (28, 30, 32, 34) de réception de paroles d'entrée libres et impromptues provenant de ladite personne en recherche de vérification;

des moyens (36) de codage des paroles d'entrée sous la forme d'un groupe non paramétrique de vecteurs de caractéristiques de paroles; et

des moyens pour réaliser une comparaison non paramétrique d'un groupe de caractéristiques de paroles correspondant à ladite personne en recherche de vérification à une trame de référence de caractéristiques de paroles correspondant à l'identité de la personne revendiquée par ladite personne en recherche de vérification.

22. Procédé pour vérifier qu'une personne utilisant un réseau téléphonique a une identité correspondant à l'une parmi une pluralité d'identités établies préalablement, ayant des trames de référence de parole associées, comprenant les étapes suivantes:

réception de paroles d'entrée libres et impromptues provenant de la personne en recherche de vérification;

codage des paroles d'entrée sous la forme d'un groupe non paramétrique de vecteurs de caractéristiques de paroles; et

réalisation d'une comparaison non paramétrique d'un groupe de caractéristiques de paroles correspondant à ladite personne en recherche de vérification à une trame de référence de caractéristiques de paroles correspondant à l'identité de la personne revendiquée par ladite personne en recherche de vérification.

FIG. 1

EP 0 643 520 B1

**FIG.1a**

EP 0 643 520 B1

```
AUDIO            28        30            32            34            36
SPEECH  →  A/D  →  PCM  →  UTTERANCE  →  SPEAKER  →  VOICE DATA  →  STORAGE
SIGNALS         ANALYSIS   DETECTION   SEPARATION   COMPRESSION
```

# FIG. 2

```
INTER-          SCORE           QUEUE
MESSAGE   →   NORMAL-   →   PROCESSING
MATCHING        IZATION
```

# FIG. 3

REFERENCE MESSAGE FRAMES

MATRIX INTERFRAME DISTANCES

UNKNOWN

MESSAGE

FRAMES

$MIN_i (d_{ij})$

$MIN_j (d_{ij})$

AVER-AGE OVER j

AVERAGE OVER i

SCORE A

SCORE B

$+$

$D_{m,r}$

## FIG. 4

REFERENCE MESSAGES

MATRIX INTER-MESSAGE MATCH SCORES

MESSAGE

IN

QUEUE

$D_{ij}$

MEAN

MEAN

STANDARD DERIVATION

## FIG. 5